# EUROPÄISCHE PATENTSCHRIFT

(11) **EP 2 673 760 B1**
(45) Veröffentlichungstag und Bekanntmachung des Hinweises auf die Patenterteilung: **22.04.2015**
(21) Anmeldenummer: 12703035.1
(22) Anmeldetag: 31.01.2012
(51) Int. Cl.: G08G 1/16

(54) **VERFAHREN ZUR UNTERSTÜTZUNG EINES FAHRERS EINES KRAFTFAHRZEUGS**
METHOD FOR ASSISTING A DRIVER OF A MOTOR VEHICLE
PROCÉDÉ D'ASSISTANCE À UN CONDUCTEUR D'UN VÉHICULE AUTOMOBILE

(30) Priorität: 09.02.2011 DE 102011003881
(43) Veröffentlichungstag der Anmeldung: 18.12.2013
(73) Patentinhaber: Robert Bosch GmbH, 70442 Stuttgart (DE)
(72) Erfinder: VERDUGO-LARA, Lidia-Pilar, 70182 Stuttgart (DE); RIGOBERT, Jerome, 70499 Stuttgart (DE); SCHNEIDER, Marcus, 71642 Ludwigsburg (DE); NIEMZ, Volker, 71277 Rutesheim (DE); SCHIERLE, Inga, 71229 Leonberg (DE); CANO, Raphael, 70180 Stuttgart (DE); MERKEL, Akos, H-1113 Budapest (HU)
(86) Internationale Anmeldenummer: PCT/EP2012/051496
(87) Internationale Veröffentlichungsnummer: WO 2012/107316

(56) Entgegenhaltungen:
- EP-A1- 2 230 155
- WO-A1-2005/009787
- WO-A1-2011/092063
- DE-A1-102007 049 965
- DE-A1-102008 036 009

## Beschreibung

Die Erfindung geht aus von einem Verfahren zur Unterstützung eines Fahrers eines Kraftfahrzeugs gemäß dem Oberbegriff des Anspruchs 1. Weiterhin betrifft die Erfindung auch eine Vorrichtung zur Unterstützung eines Fahrers eines Kraftfahrzeugs bei einem Fahrmanöver.

### Stand der Technik

Zur Durchführung von Verfahren zur Unterstützung eines Fahrers eines Kraftfahrzeugs bei Fahrmanövern werden so genannte Fahrassistenzsysteme eingesetzt. Derzeit sind insbesondere Einparkassistenzsysteme, die den Fahrer beim Einparken unterstützen, gebräuchlich. Bei Einparkassistenzsystemen wird unterschieden in solche, die die Umgebung des Fahrzeugs erfassen und den Fahrer bei Annäherung an ein Objekt warnen und solche, die zunächst erfassen, ob eine geeignete Parklücke vorliegt und anschließend eine Trajektorie berechnen, entlang der das Fahrzeug in die Parklücke eingeparkt werden kann. Um das Fahrzeug einzuparken werden dann entweder dem Fahrer Hinweise gegeben wie dieser das Fahrzeug zu steuern hat, um es entlang der Trajektorie zu bewegen oder die Lenkbewegungen werden automatisch vom Fahrzeug durchgeführt. Weiterhin ist es auch möglich, dass das Fahrzeug vollautomatisch entlang der Trajektorie in die Parklücke eingeparkt wird und der Fahrer lediglich eine überwachende Funktion hat.

Bei Einparkassistenzsystemen wird üblicherweise zunächst während der Vorbeifahrt beidseitig links und rechts neben dem Fahrzeug die Umgebung erfasst, um eine geeignete Parklücke zu finden. Die Erfassung der Umgebung erfolgt dabei üblicherweise, sobald sich das Fahrzeug bewegt und eine definierte Geschwindigkeitsschwelle nicht überschritten hat. Alternativ ist es auch möglich, dass die Erfassung zum Beispiel nach Funktionsauswahl, beispielsweise durch Betätigung eines Funktionsknopfs, erfolgt.

Nachteilig bei Systemen zur Erfassung der Umgebung ist jedoch, dass zum Beispiel fälschlicherweise Situationen als Parklücke erkannt werden können, wenn beispielsweise eine unbeabsichtigte Aktivierung der Parkplatzsuche erfolgt ist. Derartige Fehlmessungen können sich zum Beispiel ergeben, wenn das Kraftfahrzeug von zwei im Abstand einer Parklücke fahrenden Fahrzeugen überholt wird. Das von den Sensoren erfasste Bild gleicht dabei dem Bild einer Parklücke und dem Fahrer wird eine geeignete Parklücke angezeigt. Neben überholenden Fahrzeugen kann das Gleiche auch bei entgegen kommenden Fahrzeugen passieren. Weiterhin ist es möglich, dass zum Beispiel Begrenzungen einer Verkehrsinsel, beispielsweise an Fußgängerüberwegen, als Parklücke identifiziert werden. Aufgrund der geringeren Breite von Querparklücken ist die Wahrscheinlichkeit einer Fehlinterpretation hier größer als bei Längsparklücken.

Bei Querparklücken ergibt sich zusätzlich das Problem, dass Parklückenbegrenzungen nicht immer korrekt erkannt werden. So ist es zum Beispiel möglich, dass der Bereich zwischen zwei pfostenartigen Objekten als Querparklücke erkannt wird. Hierbei kann es sich zum Beispiel um Poller an einer Hafenmole handeln. Wenn der Fahrer den Fehler nicht erkennt, kann dies zu einem fehlerhaften Einparken und zum Beispiel im Falle einer Hafenmole zu einem schwerwiegenden Unfall, beispielsweise einem Sturz ins Wasser, kommen.

Ein Verfahren und eine Vorrichtung zur Unterstützung eines Einparkvorgangs sind zum Beispiel aus DE-A 10 2005 044 270 bekannt. Bei dem hier beschriebenen Verfahren werden Begrenzungen einer Parklücke Begrenzungsobjekttypen zugeordnet. Derartige Typen sind zum Beispiel Kraftwagen, Bordsteine, Motorräder, Personen, runde Gegenstände, Pflanzen oder Ähnliches.

Ein Verfahren und eine Vorrichtung zum Erfassen von Parklücken beim Vorbeifahren eines Fahrzeugs an einer solchen Lücke sind zum Beispiel auch in DE-A 10 2006 005 059 beschrieben.

Bei den bekannten Systemen wird jedoch jeweils nur erfasst, ob eine Lücke als Parklücke ausreichend groß ist. Eine Untersuchung, ob es sich tatsächlich um eine Parklücke handelt, findet nicht statt.

Das Dokument WO 2005/009787 A1 beschreibt ein Verfahren und eine Vorrichtung zum Rückwärts-Seitwärts-Einparken, wobei ein Eintauchen des Fahrzeugs während des Parkvorgangs in die Gegenfahrspur einer mehrspurigen Fahrbahn rechtzeitig erkannt wird und eine Warnung an den Fahrer ausgegeben wird bzw. der Parkvorgang abgebrochen wird.

Dokument EP 10 2008 036009 A1 werden ein Verfahren zum Kollisionsschutz eines Kraftfahrzeugs und einen Parkhausassistent beschrieben. Dabei weist das Fahrzeug eine Umfeldsensorik zur Detektion von Objekten im Umfeld des Fahrzeugs auf. Dabei werden Sensorinformationen der Umfeldsensorik erfasst, eine Umfeldkarte aus den Sensorinformationen erstellt, eine Fahrzeugeigenbewegung bestimmt und eine Kollisionswahrscheinlichkeit mit in der Umgebung des Fahrzeugs befindlichen Objekten bestimmt.

Die Erfindung ist in den unabhängigen Ansprüchen offenbart.

### Offenbarung der Erfindung

### Vorteile der Erfindung

Beim erfindungsgemäßen Verfahren zur Unterstützung eines Fahrers eines Kraftfahrzeugs wird während der Fahrt die Umgebung seitlich neben dem Kraftfahrzeug erfasst, um eine Parklücke zu detektieren. Bei erkannter Parklücke wird eine Trajektorie bestimmt, entlang der das Kraftfahrzeug in die Parklücke einparken kann, wobei während des Einparkens die Umgebung des Kraftfahrzeugs überwacht wird. Bei Erkennen einer vorgegebenen Situation wird die Parklückenausgabe für eine vorgegebene Wegstrecke unterbunden, der Parkvorgang abgebrochen oder eine Warnung an den Fahrer ausgegeben.

Durch das erfindungsgemäße Verfahren ergibt sich eine zusätzliche Verbesserung von Einparksystemen, da durch das Unterbinden der Parklückenausgabe für eine vorgegebene Wegstrecke bei Erkennen einer vorgegebenen Situation nur tatsächlich vorhandene Parklücken ausgegeben werden und durch den Abbruch des Parkvorganges beziehungsweise die Ausgabe der Warnung an den Fahrer zusätzlich vermieden wird, dass das Fahrzeug unbemerkt in eine Gefahrensituation bewegt wird.

Wenn bei Erkennen einer vorgegebenen Situation die Ausgabe einer Parklücke für eine vorgegebene Wegstrecke unterbunden wird, wird das Risiko einer Fehlfunktion verringert. Durch das Verfahren wird vermieden, dass Bereiche als Parklücke erfasst werden, die eigentlich keine sind. Durch die Vermeidung der Falscherkennung von Parklücken wird die Sicherheit des Systems erhöht, da bereits einer der ersten Fehlerpfade, nämlich der Pfad "erfolgreich detektierte Parklücke" verhindert wird. Je nach Einstellung des Fahrassistenzsystems ist es nämlich möglich, dass die Lenkung bereits aktiv wird, sobald der Rückwärtsgang eingelegt wird.

Die Erfassung einer Parklücke ist nur dann möglich, wenn sich das die Parklücke vermessende Kraftfahrzeug bewegt. Aufgrund der Fahrzeugbewegung kann mittels der Radimpulszähler die zurückgelegte Strecke bestimmt werden. Diese Strecke kann mit den empfangenen Daten der Abstandssensoren, die zur Erfassung eingesetzt werden, abgeglichen werden. Sobald eine Lücke den hinterlegten Regeln und einer minimalen Länge entspricht, wird dem System mitgeteilt, dass eine Parklücke detektiert worden ist.

Da jedoch nur die zurückgelegte Strecke und das durch die Abstandssensoren erfasste Bild zur Beurteilung einer Parklücke herangezogen werden, ist es zum Beispiel möglich, dass auch dann eine Parklücke detektiert wird, wenn das Fahrzeug von zwei im Abstand einer Parklücke fahrenden Fahrzeugen überholt wird oder alternativ Fahrzeuge in einem entsprechenden Abstand entgegenkommen. Auch in diesem Fall wird eine Parklücke ausgegeben. Weiterhin ist es auch möglich, dass zum Beispiel an einer Verkehrsinsel, die durch Begrenzungspfosten markiert ist, eine Parklücke erkannt wird.

Eine vorgegebene Situation, bei der die Parklückenausgabe für eine vorgegebene Wegstrecke unterbunden wird, ist erfindungsgemäß die Erfassung von überholenden oder entgegen kommenden Fahrzeugen oder, das Erkennen eines Fußgängerüberwegs oder einer mehrspurigen Straße. Die vorgegebene Wegstrecke, für die die Parklückenausgabe unterbunden wird, ist zum Beispiel die Länge einer minimalen Parklücke.

Einen Abbruch des Parkvorganges oder die Ausgabe einer Warnung an den Fahrer erfolgt erfindungsgemäß, wenn bei einer Querparklücke eine Begrenzung durch Pfosten erfasst wird. Die Begrenzung durch Pfosten kann dabei einseitig oder beidseitig sein. Da Pfosten zum Beispiel in Bereichen eingesetzt werden sollen, in denen nicht geparkt werden soll, zum Beispiel, weil eine mögliche Gefahr droht, beispielsweise an einer Uferkante oder einer Hafenmole, ist es vorteilhaft, in einer solchen Situation entweder den Parkvorgang abzubrechen oder zumindest den Fahrer zu warnen. Bei einer Warnung kann der Fahrer dann selbsttätig entscheiden, ob eine Parklücke vorliegt und der Einparkvorgang fortgesetzt werden soll.

Ein Objekt wird zum Beispiel dann als Pfosten erfasst, wenn zunächst eine Abnahme der Entfernung zu einem Objekt und daran anschließend eine Zunahme zur Entfernung zu dem Objekt gemessen wird. Hierdurch ergibt sich ein charakteristisches Bild, das als Pfosten interpretiert werden kann.

Für die Erfassung der Parklücke während der Vorbeifahrt und die Überwachung während des Einparkvorgangs, zum Beispiel um zu erkennen, ob sich Objekte auf dem geplanten Weg in die Parklücke befinden oder zum Beispiel eine Begrenzung durch einen Pfosten erfasst wurde, werden üblicherweise Abstandssensoren eingesetzt. Geeignete Sensoren sind beispielsweise Ultraschallsensoren, Infrarotsensoren, Radarsensoren, LIDAR-Sensoren oder optische Sensoren wie Kameras. Üblich und bevorzugt ist der Einsatz von Ultraschallsensoren.

Um nur dann eine Parklücke auszugeben, wenn die erfasste Lücke tatsächlich eine Parklücke ist, ist es zum Beispiel notwendig, überholende oder entgegen kommende Fahrzeuge zu erfassen. Hierzu können zum Beispiel Radarsensoren oder optische Sensoren eingesetzt werden. Bei Verwendung von Radar-Systemen lassen sich zum Beispiel auf Basis der ausgesendeten Radarstrahlen überholende und entgegen kommende Fahrzeuge erkennen. Hierzu lässt sich beispielsweise der Dopplereffekt ausnutzen.

Auch bei Einsatz von Ultraschallsensoren kann der Dopplereffekt genutzt werden, um überholende oder entgegen kommende Fahrzeuge zu erkennen. Wenn Ultraschallsensoren genutzt werden, eigenen sich insbesondere Ultraschallsensoren, die als Parklückensuchsensoren eingesetzt werden und sich üblicherweise im Frontbereich des Fahrzeugs befinden. Die Parklückensuchsensoren erfassen dabei üblicherweise den Bereich seitlich neben dem Fahrzeug. Neben den Parklückensuchsensoren können auch oder zusätzlich so genannte "Tote-Winkel-Sensoren", mit denen der tote Winkel des Fahrzeugs überwacht werden kann, verwendet werden. Die Tote-Winkel-Sensoren befinden sich üblicherweise im Heckbereich des Fahrzeugs und erfassen den Bereich schräg hinter dem Fahrzeug.

Für die Auswertung des Dopplereffekts wird üblicherweise das empfangene Analogsignal direkt verwendet.

Überholende und entgegen kommende Fahrzeuge könne auch mit einem optischen Sensor, beispielsweise einer Kamera erkannt werden. Hier lässt sich die Bewegung der Fahrzeuge zum Beispiel durch die Veränderung der Position des Fahrzeugs zu einem charakteristischen festen Punkt, beispielsweise einer Fahrbahnmarkierung erkennen. Auch ist es möglich, durch den Einsatz von optischen Sensoren zum Beispiel Fahrbahnmarkierungen wie Fußgängerüberwege mit Zebrastreifen zu erkennen. Auch ist es möglich, im Rahmen einer optischen Verkehrszeichenerkennung Fußgängerüberwege mit entsprechender Beschilderung oder an Ampeln zu erkennen.

Um zu vermeiden, dass auf einer mehrspurigen Straße eine unerwünschte Parklücke erkannt wird, ist es zum Beispiel möglich, die Daten eines Navigationssystems zu nutzen, in dem hinterlegt ist, dass es sich bei der derzeit befahrenen Straße um eine mehrspurige Straße handelt. So sollen zum Beispiel nur dann Parklücken ausgegeben werden, wenn sich das Fahrzeug auf einer Fahrbahn zum Randstreifen und nicht auf dem Mittelstreifen der Fahrbahn befindet. Eine Parklücke befindet sich ebenfalls nur auf der Randseite und nicht auf der mittleren Seite. Durch die Erfassung von Parklücken nur am Randbereich bei gleichzeitiger Erfassung, das sich das Fahrzeug auf dem Fahrstreifen, der am Rand der Fahrbahn ist, bewegt, werden Parklücken ausgegeben. Sollte sich das Fahrzeug auf einer mittleren Fahrspur bewegen oder überholende oder entgegen kommende Fahrzeuge erfasst werden, wird keine Parklücke ausgegeben. Weiterhin sollen dann keine Parklücken ausgegeben werden, wenn sich das Fahrzeug auf einer Bundesstraße oder einer Autobahn bewegt.

Die Erkennung von entgegen kommenden oder voraus fahrenden Fahrzeugen kann zum Beispiel auch durch Nutzung eines Fernlichtassistenten erfolgen. Durch den Fernlichtassistenen können entgegen kommende oder voraus fahrende Fahrzeuge erkannt werden.

Eine weitere Möglichkeit zur Erfassung überholender Fahrzeuge ist ein Toter-Winkel-Assistent. Hierbei wird mittels eines Sensors der Bereich insbesondere hinten neben dem Fahrzeug erfasst. Die Überwachung erfolgt hierbei auch üblicherweise auf Basis von Ultraschall. Sobald mit dem hinteren Sensor ein Fahrzeug erfasst wird und damit eine Situation, in der der Fahrer auf ein Objekt im toten Winkel hingewiesen wird, kann auch eine Parklückenausgabe unterbrochen werden, da bei Erfassung einer Toten-Winkel-Situation die Wahrscheinlichkeit für eine mehrspurige Straße sehr hoch ist.

Eine Vorrichtung zur Durchführung des Verfahrens nach dem unabhängigen Anspruch 7 umfasst Mittel zur Erfassung der Umgebung seitlich neben dem Kraftfahrzeug, Mittel zur Bestimmung einer Trajektorie entlang der das Fahrzeug in eine erfasste Parklücke einparken kann sowie Mittel, mit denen bei Erkennen einer vorgegebenen Situation die Parklückenausgabe für eine vorgegebene Wegstrecke unterbunden werden kann, der Parkvorgang abgebrochen werden kann oder eine Warnung an den Fahrer ausgegeben werden kann.

Mittel zur Bestimmung der Trajektorie und Mittel, mit denen bei Erkennen einer vorgegebenen Situation die Parklückenausgabe für eine vorgegebene Wegstrecke unterbunden werden kann, der Parkvorgang abgebrochen werden kann oder eine Warnung an den Fahrer ausgegeben werden kann, umfassen zum Beispiel ein Steuergerät mit Speichermedium und Mikroprozessor. Auf dem Speichermedium kann ein Programmcode hinterlegt werden, der die Auswertung steuert. Zusätzlich können auf dem Speichermedium typische Daten für Situationen abgelegt werden, bei denen eine Unterbindung der Parklückenausgabe, ein Abbruch des Parkvorganges oder die Ausgabe einer Warnung an den Fahrer erfolgen soll. Die vorgegebenen Situationen sind, wie vorstehend bereits beschrieben, zum Beispiel die Erfassung entgegen kommender oder überholender Fahrzeuge, das Erkennen eines Fußgängerüberwegs oder einer mehrspurigen Straße sowie die Erfassung von Lückenbegrenzungen durch Pfosten.

Mittel zur Erfassung der Umgebung seitlich neben dem Kraftfahrzeug sind zum Beispiel Ultraschallsensoren, Infrarotsensoren, Radarsensoren, LIDAR-Sensoren und optische Sensoren wie Kameras. Besonders bevorzugt sind Ultraschallsensoren.

### Kurze Beschreibung der Zeichnungen

Ausführungsbeispiele der Erfindung sind in den Figuren dargestellt und werden in der nachfolgenden Beschreibung näher erläutert.

Es zeigen:
- Figur 1: Erfassung einer Querparklücke,
- Figur 2: Erfassung einer Längsparklücke,
- Figur 3: Parklückenerfassung bei überholenden Fahrzeugen,
- Figur 4: Parklückenerfassung bei Auftreten eines Fußgängerüberwegs,
- Figur 5: ein Einparkvorgang in eine von Fahrzeugen begrenzte Querparklücke,
- Figur 6: erfasster Objektabstand bei der in Figur 5 dargestellten Situation,
- Figur 7: Einparkvorgang in eine von Pfosten begrenzte Lücke,
- Figur 8: erfasster Abstand zu den die Parklücke begrenzenden Pfosten.

### Ausführungsformen der Erfindung

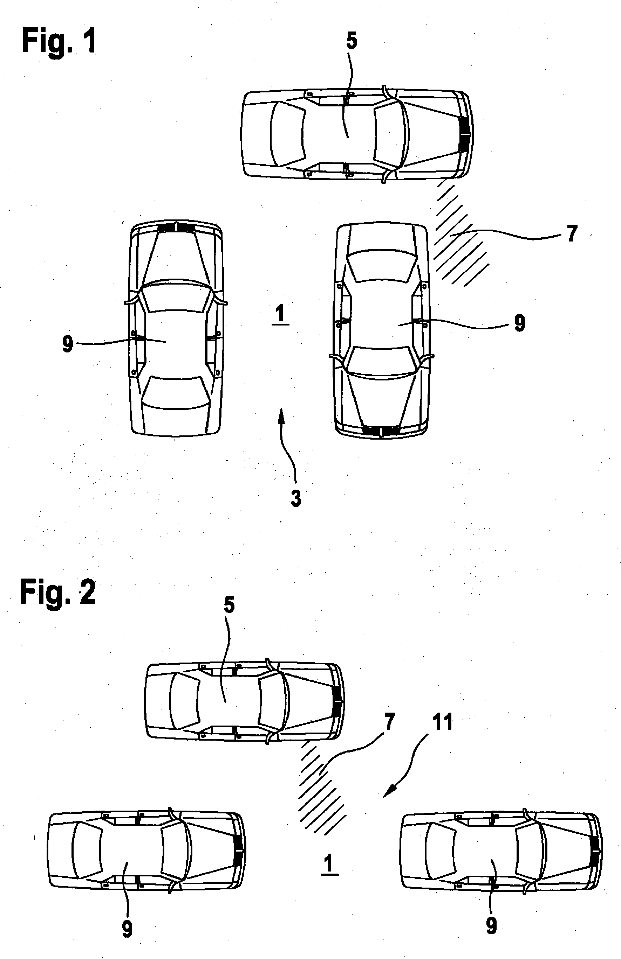

In Figur 1 ist eine Erfassung einer Querparklücke bei der Vorbeifahrt mit einem Fahrzeug dargestellt.

Um eine Lücke 1 als Parklücke 3 zu identifizieren, wird während der Vorbeifahrt mit einem Kraftfahrzeug 5 die Umgebung des Kraftfahrzeugs 5 seitlich neben dem Kraftfahrzeug 5 erfasst. Zum Erfassen werden üblicherweise Abstandssensoren, beispielsweise Ultraschallsensoren, eingesetzt. In Figur 1 ist dies beispielhaft mit einer Schallkeule 7 für einen Ultraschallsensor dargestellt. Mit dem Abstandssensor wird der Abstand zu Objekten im Erfassungsbereich, das heißt in dem von der Schallkeule 7 abgedeckten Bereich, erfasst. In den Bereichen, in denen kein Objekt erfasst wird, wird eine Lücke 1 angenommen. Diese kann zum Beispiel, wie in Figur 1 dargestellt, von Fahrzeugen 9 begrenzt sein.

Wenn der Abstand zwischen den Fahrzeugen 9 breit genug ist, wird auf eine Parklücke geschlossen. Bei einer Querparklücke muss die Breite zwischen den Fahrzeugen 9 dabei etwas größer sein als die Breite des vermessenden Fahrzeugs 5, sodass nach dem Einparken des Fahrzeugs 5 in die als Querparklücke 3 identifizierte Lücke 1 auf beiden Seiten des Fahrzeugs 5 ausreichend Platz verbleibt, damit die Türen des Fahrzeugs 5 noch geöffnet werden können.

Sobald vom Fahrassistenzsystem eine als Querparklücke 3 geeignete Lücke 1 gefunden worden ist, wird dies dem Fahrer gemeldet. Der Fahrer muss nun das Einparksystem aktivieren und wird in die Querparklücke 3 geführt. Hierbei ist es einerseits möglich, dass dem Fahrer notwendige Lenkbewegungen angezeigt werden oder alternativ das Fahrzeug automatisch gelenkt wird. In diesem Fall bleibt die Längsführung, d.h. Beschleunigen, Geschwindigkeit Halten und Abbremsen, beim Fahrer. Weiterhin ist es auch möglich, dass der Einparkvorgang vollautomatisch durchgeführt und das System sowohl die Längs- als auch die Querführung übernimmt.

Die Erfassung einer Längsparklücke ist in Figur 2 dargestellt. Das Erfassungsprozedere entspricht im Wesentlichen dem in Figur 1 Dargestellten. Im Unterschied zu einer Querparklücke wie sie in Figur 1 dargestellt ist, ist eine Längsparklücke jedoch länger, wobei die Länge so gewählt wird, dass das Fahrzeug bevorzugt mit einem Fahrzug in die Parklücke 3 einparken kann. Es ist jedoch möglich, dass die minimale Parklückenlänge so gewählt wird, dass das Fahrzeug mit mehr als einem Fahrzug, beispielsweise mit drei Fahrzügen eingeparkt werden kann. Bevorzugt wird eine Lücke 1 jedoch nur dann als Längsparklücke 11 ausgegeben, wenn der Einparkvorgang in einem Zug durchgeführt werden kann.

Die Querparklücke 3, beziehungsweise die Längsparklücke 11 können zum Beispiel, wie in den Figuren 1 und 2 dargestellt, durch Fahrzeuge 9 begrenzt sein. Weiterhin ist es auch möglich, dass die Begrenzung der Parklücken 3, 11 zum Beispiel von einem Fahrzeug und einem anderen Objekt, beispielsweise einem Poller, einer Mauer oder einer Pflanze gebildet wird. Auch eine Begrenzung von zwei von Fahrzeugen verschiedenen Gegenständen, beispielsweise Mauern, Pflanzen, Poller, Bordsteine oder ähnliche Begrenzungen, ist möglich. Hierbei können die Begrenzungen gleich oder unterschiedlich sein.

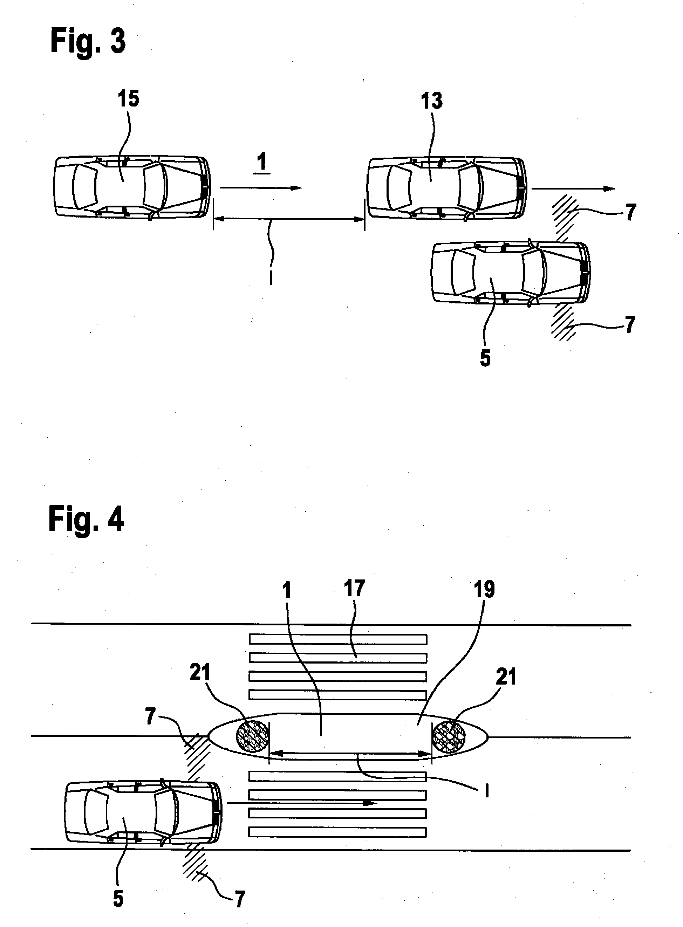

Insbesondere wenn die Parklücke von zwei Fahrzeugen, wie in Figur 2 dargestellt, begrenzt ist, besteht die Gefahr, dass zum Beispiel eine Lücke 1 zwischen zwei fahrenden Fahrzeugen als Parklücke interpretiert wird. Eine Situation, in der dies auftreten kann, ist beispielhaft in Figur 3 dargestellt.

Das die Parklücke suchende Fahrzeug 5 fährt mit aktivierten Abstandssensoren zur Erfassung der Umgebung. Die Erfassung ist hier beispielhaft durch Schallkeulen 7 dargestellt. Das Fahrzeug 5 wird im vorliegenden Fall von einem ersten Fahrzeug 13 und einem dem ersten Fahrzeug folgenden zweiten Fahrzeug 15 überholt. Zwischen den Fahrzeugen 13, 15 befindet sich eine Lücke 1, deren Länge I mindestens der minimalen Parklückenlänge entspricht. Vom Abstandssensor des Fahrzeugs 5 wird hierdurch ein Bild erfasst, das dem einer Parklücke entspricht. Die Lücke 1 zwischen dem ersten Fahrzeug 13 und dem zweiten Fahrzeug 15 wird daher fälschlicherweise als Parklücke erkannt und als solche ausgegeben.

Die gleiche Situation wie in Figur 3 dargestellt ergibt sich nicht nur beim Überholen durch Fahrzeuge, deren Abstand der minimalen Parklückenlänge entspricht, sondern auch bei entgegen kommenden Fahrzeugen mit entsprechendem Abstand. In diesem Fall wird jeweils auf der Seite, auf der die Fahrzeuge überholen, beziehungsweise auf der die entgegen kommenden Fahrzeuge vorbeifahren, eine Parklücke vom Fahrassistenzsystem erfasst.

Um eine solche fehlerhafte Ausgabe zu vermeiden wird erfindungsgemäß zusätzlich zum Abstand zwischen den Objekten, das heißt hier den Fahrzeugen 13, 15 und der zurückgelegte Strecke des messenden Fahrzeuges 5 auch erfasst, ob sich die Objekte, die erfasst worden sind, bewegen. Hierzu ist es zum Beispiel möglich, Radarsensoren oder optische Sensoren, mit denen die Bewegung eines Fahrzeuges erfasst werden kann, einzusetzen.

Die Wahrscheinlichkeit, dass es sich bei den vom System erfassten Objekten um sich bewegende Fahrzeuge handelt, ist ebenfalls dann sehr hoch, wenn sich das eine Parklücke suchende Fahrzeug 5 auf einer mehrspurigen Straße bewegt. Wenn bekannt ist, dass die Straße mehrspurig ist, ist es zum Beispiel von vornherein möglich auszuschließen, auf der Fahrerseite des Fahrzeugs 5 eine Parklücke zu suchen. Weiterhin kann auch dann eine Parklücke ausgeschlossen werden, wenn sich das Fahrzeug beispielsweise auf einer mittleren oder linken Spur einer mehrspurigen Fahrbahn bewegt. Eine potentielle Parklücke befände sich nämlich nur neben der rechten Fahrspur. In Verkehrssystemen mit Linksverkehr wäre eine Parklücke entsprechend nur dann vorzufinden, wenn sich das Fahrzeug auf der linken Fahrspur bewegt.

Die Feststellung, ob die Straße mehrspurig ist, kann zum Beispiel durch Unterstützung mit einem Navigationssystem, in dem die Spurmerkmale abgelegt sind, erfolgen. Dem Fahrassistenzsystem, das den Fahrer beim Einparken unterstützt, werden Daten vom Navigationssystem über die Eigenschaft der Straße, auf dem sich das die Parklücke suchende Fahrzeug 5 befindet, geliefert. Zusätzlich kann zum Beispiel durch Verwendung eines optischen Sensors, beispielsweise einer Kamera, ermittelt werden, auf welcher Spur sich das Fahrzeug bewegt. Wenn mit der optischen Sensorik erfasst wird, dass das Fahrzeug auf der mittleren oder linken Spur gefahren wird, wird die Ausgabe einer Parklücke unterbunden.

Weiterhin sollte eine Ausgabe einer Parklücke auch dann unterbunden werden, wenn sich das Fahrzeug auf einer Bundesstraße oder einer Autobahn bewegt. Aus den Daten eines Navigationssystems lässt sich weiterhin erfassen, ob sich das Fahrzeug in einem Kreuzungsbereich befindet. In diesem Fall unterbleibt erfindungsgemäß die Ausgabe einer Parklücke ebenfalls.

Neben einer fälschlichen Erfassung einer Parklücke, die sich durch den Abstand von zwei überholenden oder entgegen kommenden Fahrzeugen ergibt, kann eine Parklücke zum Beispiel auch im Bereich eines Fußgängerüberweges 17 fälschlicherweise erfasst werden. Wenn der Fußgängerüberweg 17 eine Verkehrsinsel 19 aufweist, deren Anfang und Ende zum Beispiel durch Poller 21 markiert ist, kann die Lücke 1 zwischen den Pollern 21 als Parklücke identifiziert werden, wenn der Abstand I zwischen den Pollern 21 der minimalen Länge für eine Längsparklücke oder dem minimalen Abstand für eine Querparklücke entspricht. Um auszuschließen, dass die Lücke 1 zwischen den Pollern 21 als Parklücke identifiziert wird, ist es zum Beispiel möglich, mittels optischer Systeme zusätzlich zu überwachen, ob im Bereich der Lücke 1 ein Fußgängerüberweg, der beispielsweise durch einen Zebrastreifen gekennzeichnet sein kann, existiert. Auch kann zum Beispiel eine Verkehrszeichenüberwachung eingesetzt werden und in dem Fall, dass ein einen Fußgängerüberweg kennzeichnendes Verkehrszeichen erfasst wird, eine Parklückenausgabe ausgeschlossen werden. Auf diese Weise wird vermieden, dass fälschlicherweise eine Parklücke ausgegeben wird.

Neben der Erfassung von Verkehrszeichen zur Ermittlung, ob sich im Bereich der Lücke 1 ein Fußgängerüberweg befindet, kann auch eine Ampelerkennung erfolgen. Da im Bereich einer Ampel nicht geparkt werden darf, kann auch dann, wenn eine Ampelanlage erfasst wird, die Ausgabe einer Parklücke unterbunden werden. Dies ist auch dann möglich, wenn auf der zum Fahrbahnrand weisenden Seite eine Lücke 1 detektiert wird. Sobald der Minimalabstand zu einer erfassten Ampel oder einem erfassten Fußgängerüberweg 17 erkannt wird, wird die Ausgabe einer Parklücke unterbunden, bis das Fahrzeug 5, das die Parklücke sucht, den Bereich der Ampel oder des Fußgängerüberweges passiert hat. Dem Fahrer des Fahrzeugs 5 werden somit Lücken 1, die in Bereichen sind, in denen nicht geparkt werden darf, gar nicht erst als Parklücke angeboten.

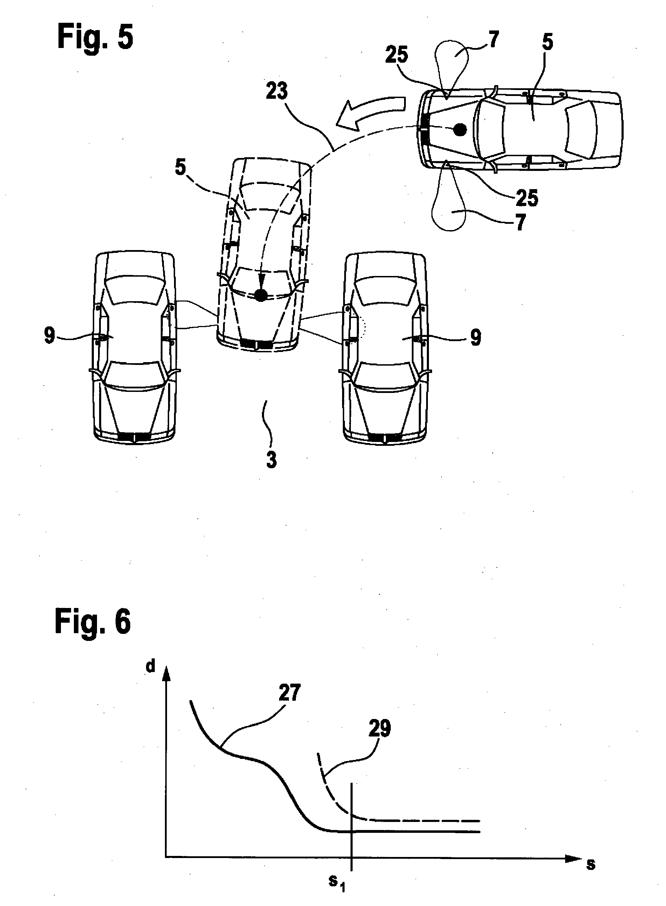

Wenn eine ordnungsgemäße Parklücke erfasst worden ist, wird eine Trajektorie 23 in die Parklücke berechnet. Der Vorgang entlang der Trajektorie 23 in die Parklücke 3 ist für eine Querparklücke 3 beispielhaft in Figur 5 dargestellt.

Während des Einparkvorganges, solange sich das Fahrzeug 5 entlang der Trajektorie 23 bewegt, wird weiterhin mit geeigneten Abstandssensoren die Umgebung des Fahrzeuges erfasst. Die Erfassung der Umgebung ist auch hier durch Schallkeulen am Fahrzeug dargestellt. Während des Einparkvorganges wird der Abstand zu Objekten seitlich neben dem Fahrzeug erfasst. Zunächst befindet sich kein Objekt innerhalb des Erfassungsbereiches der Sensoren 25, so dass der von den Sensoren erfasste Abstand zu einem Objekt maximal ist. Während des Einparkvorgangs gelangen die die Parklücke 3 begrenzenden Fahrzeuge 9 jeweils in den Erfassungsbereich der Sensoren 25. Während des Einparkvorganges zunächst das die rechte Seite der Parklücke 3 begrenzende Fahrzeug 9 und dann das die linke Seite der Parklücke 3 begrenzende Fahrzeug 9. Sobald sich das Fahrzeug 5, das in die Parklücke 3 einparkt, parallel zu den die Parklücke 3 begrenzenden Fahrzeuge 9 bewegt, bleibt der von den Sensoren 25 erfasste Abstand zu einem Objekt im Wesentlichen konstant. Beispielhaft ist der von den Sensoren 25 erfasste Abstand zu einem Objekt in Figur 6 dargestellt. Auf der y-Achse ist der erfasste Abstand zu einem Objekt und auf der x-Achse der vom Fahrzeug 5 zurückgelegte Weg dargestellt.

Mit s₁ ist der Punkt markiert, zu dem das Einparken der Fahrzeuge 5 beide die Parklücke 3 begrenzenden Objekte erfasst.

Mit einer durchgehenden Linie 27 ist der vom rechten Sensor des Kraftfahrzeugs 25 erfasste Abstand zu einem Objekt dargestellt und mit einer gestrichelten Linie 29 der vom linken Sensor erfasste Abstand.

Sobald sich das Fahrzeug 5 parallel zu den die Querparklücke 3 begrenzenden Fahrzeugen 9 bewegt, bleibt der von den Sensoren 25 erfasste Abstand auf der linken Seite und auf der rechten Seite im Wesentlichen konstant. Durch den gleich bleibenden Abstand beim Fahren wird davon ausgegangen, dass es sich bei den die Querparklücke 3 begrenzenden Objekten um Fahrzeuge 9 handelt. Das System erkennt hierdurch, dass eine ordnungsgemäße Parklücke vorliegt.

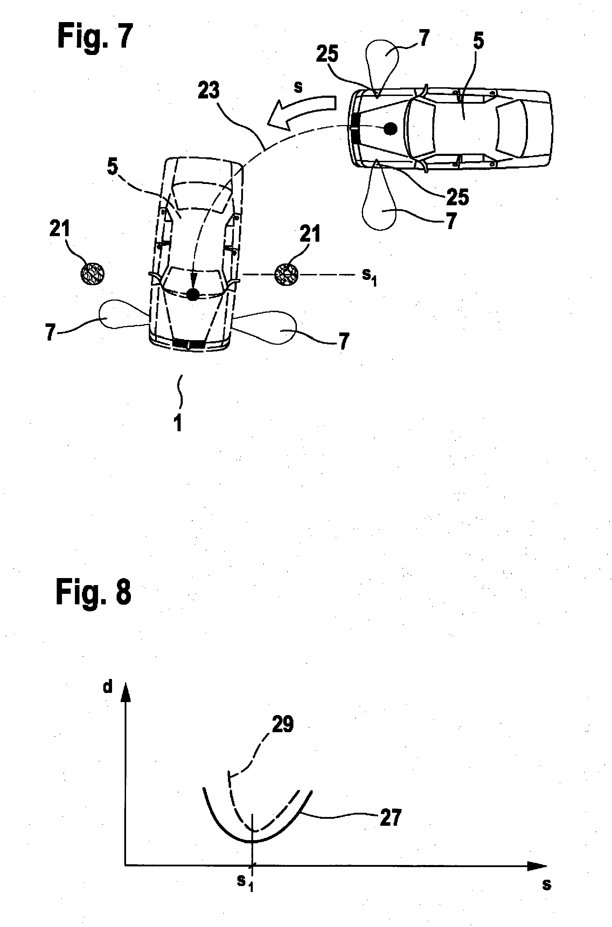

In Figur 7 ist ein Einparkvorgang in eine Lücke 1 dargestellt, wobei die Lücke 1 von Pollern 21 begrenzt ist. Während der Vorbeifahrt wird zunächst eine ordnungsgemäße Parklücke angenommen. Nach dem Erfassen der Lücke 1 als Parklücke beginnt der Einparkvorgang. Während des Einparkens wird auch hier durch Abstandsensoren 25 im Heckbereich des Fahrzeugs 5 die Umgebung weiter erfasst. Der Abstand zu den die Parklücke begrenzenden Objekten 21, der von den Sensoren 25 erfasst wird, ist in Figur 8 dargestellt. Während des Einparkvorganges nimmt der Abstand zu den Objekten 21 zunächst ab. Aufgrund der fehlenden Längenausdehnung der Objekte 21, die beispielsweise als Poller mit kreisförmigen Querschnitt gestaltet sind, nimmt nach dem Passieren der Poller 21 an einem Punkt s₁ der Abstand, der von den Sensoren erfasst wird, wieder zu. Bis die Poller 21 den durch die Schallkeulen 7 dargestellten Erfassungsbereich der Sensoren 25 verlassen haben. Auch in Figur 8 ist der vom rechten Sensor erfasste Abstand zum Poller 21 durch eine durchgezogene Linie 27 dargestellt und der vom linken Sensor durch eine gestrichelte Linie 29.

Durch die Zunahme des Abstandes zu den die Lücke 1 begrenzenden Objekten nach Erreichen eines minimalen Abstandes wird darauf geschlossen, dass die die Lücke 1 begrenzenden Objekte keine Fahrzeuge 9 sind und somit die Möglichkeit besteht, dass es sich bei der Lücke 1, in die das Fahrzeug 5 einparkt, nicht um eine ordnungsgemäße Parklücke handelt. Aufgrund des Verlaufes des von den Sensoren 25 erfassten Abstandes zu den Objekten wird angenommen, dass die Lücke 1 keine gültige Parklücke ist und der Einparkvorgang kann abgebrochen werden. Alternativ ist es auch möglich, dass das Einparkassistenzsystem eine Warnung an den Fahrer ausgibt. Bevorzugt ist die Ausgabe einer Warnung. Nach Ausgabe der Warnung an den Fahrer kann dieser entscheiden, ob er das Einparkmanöver weiter fortsetzen will, weil es sich möglicherweise doch um eine reguläre Parklücke handelt, die jedoch durch Pfosten begrenzt worden ist, oder der Fahrer doch das Einparkmanöver abbricht, da es sich nicht um eine ordnungsgemäße Parklücke handelt.

Die Warnung an den Fahrer kann zum Beispiel optisch, akustisch oder haptisch erfolgen. Eine optische Warnung erfolgt zum Beispiel durch ein entsprechendes Warnsignal im Sichtbereich des Fahrers, beispielsweise eine aufleuchtende Warnlampe. Auch ist es möglich, zum Beispiel über den Bordcomputer eine Textausgabe vorzusehen, die in kurzen Worten die Situation schildert.

Eine akustische Warnung kann zum Beispiel durch Ausgabe eines Warnsignals oder durch eine Sprachausgabe erfolgen. Eine haptische Warnung des Fahrers lässt sich zum Beispiel durch einen geänderten Pedaldruck, eine Vibration oder Ähnliches realisieren. Bevorzugt zur Warnung des Fahrers ist ein akustisches oder ein optisches Signal oder eine Kombination aus akustischem und optischem Signal.

## Patentansprüche

1. Verfahren zur Unterstützung eines Fahrers eines Kraftfahrzeugs (5), bei dem während der Fahrt die Umgebung seitlich neben dem Kraftfahrzeug (5) erfasst wird, um eine Parklücke (3, 11) zu detektieren, und bei erkannter Parklücke (3, 11) eine Trajektorie (23) bestimmt wird, entlang der das Kraftfahrzeug (5) in die Parklücke (3, 11) einparken kann, wobei während des Einparkens die Umgebung des Kraftfahrzeugs (5) überwacht wird, **dadurch gekennzeichnet, dass** bei Erkennen einer vorgegebenen Situation die Parklückenausgabe für eine vorgegebene Wegstrecke unterbunden wird, der Parkvorgang abgebrochen wird oder eine Warnung an den Fahrer ausgegeben wird, wobei die vorgegebene Situation, bei der die Parklückenausgabe für die vorgegebene Wegstrecke unterbunden wird, eine Erfassung von überholenden oder entgegenkommenden Fahrzeugen, ein Erkennen eines Fußgängerüberwegs, ein Erkennen einer mehrspurigen Straße, ein Erkennen eines Objekts im toten Winkel des Fahrzeugs oder ein Erkennen eines Kreuzungsbereichs ist, wobei die vorgegebene Situation, bei der ein Abbruch des Parkvorgangs oder die Ausgabe einer Warnung an den Fahrer erfolgt, eine Erfassung einer Begrenzung einer Querparklücke durch Pfosten umfasst.

2. Verfahren gemäß Anspruch 1, **dadurch gekennzeichnet, dass** ein Objekt als Pfosten (21) erfasst wird, wenn eine Abnahme der Entfernung zu einem Objekt und eine sich daran anschließende Zunahme der Entfernung zu dem Objekt gemessen wird.

3. Verfahren gemäß Anspruch 1, **dadurch gekennzeichnet, dass** zur Erfassung entgegenkommender oder überholender Fahrzeuge Radarsensoren oder optische Sensoren eingesetzt werden.

4. Verfahren gemäß Anspruch 1, **dadurch gekennzeichnet, dass** zur Erfassung mehrspuriger Straßen Daten eines Navigationssystems genutzt werden.

5. Verfahren gemäß Anspruch 1, **dadurch gekennzeichnet, dass** zur Erfassung entgegenkommender oder vorausfahrender Fahrzeuge ein Fernlichtassistent genutzt wird.

6. Verfahren gemäß Anspruch 1, **dadurch gekennzeichnet, dass** zur Erfassung überholender Fahrzeuge ein Toter-Winkel-Assistent eingesetzt wird.

7. Vorrichtung zur Unterstützung eines Fahrers eines Kraftfahrzeugs (5) bei einem Fahrmanöver, umfassend Mittel (25) zur Erfassung der Umgebung seitlich neben dem Kraftfahrzeug (5), Mittel zur Bestimmung einer Trajektorie (23), entlang der das Fahrzeug in eine erfasste Parklücke (3, 11) einparken kann, sowie Mittel, mit denen bei Erkennen einer vorgegebenen Situation die Parklückenausgabe für eine vorgegebene Wegstrecke unterbunden werden kann, der Parkvorgang abgebrochen werden kann oder eine Warnung an den Fahrer ausgegeben werden kann, wobei die Parklückenausgabe für eine vorgegebene Wegstrecke unterbunden wird, wenn die vorgegebene Situation eine Erfassung von überholenden oder entgegenkommenden Fahrzeugen, ein Erkennen eines Fußgängerüberwegs, ein Erkennen einer mehrspurigen Straße, ein Erkennen eines Objekts im toten Winkel des Fahrzeugs oder ein Erkennen eines Kreuzungsbereichs ist, und der Parkvorgang abgebrochen oder eine Warnung an den Fahrer ausgegeben wird, wenn die vorgegebene Situation eine Erfassung einer Begrenzung einer Querparklücke durch Pfosten umfasst.

8. Vorrichtung gemäß Anspruch 7, **dadurch gekennzeichnet, dass** die Mittel zur Bestimmung der Trajektorie (23) und die Mittel, mit denen bei Erkennen einer vorgegebenen Situation die Parklückenausgabe für eine vorgegebene Wegstrecke unterbunden werden kann, der Parkvorgang abgebrochen werden kann oder eine Warnung an den Fahrer ausgegeben werden kann, ein Steuergerät mit Speichermedium und Mikroprozessor umfassen.

9. Vorrichtung gemäß Anspruch 7 oder 8, **dadurch gekennzeichnet, dass** die Mittel (25) zur Erfassung der Umgebung seitlich neben dem Kraftfahrzeug (5) Ultraschallsensoren, Infrarotsensoren, Radarsensoren, LIDAR-Sensoren und optische Sensoren umfassen.

## Claims

1. Method for assisting a driver of a motor vehicle (5) in which during travel the surroundings laterally next to the motor vehicle (5) are sensed in order to detect a parking space (3, 11), and when a parking space (3, 11) is detected a trajectory (23) along which the motor vehicle (5) can park in the parking space (3, 11) is determined, wherein during the parking the surroundings of the motor vehicle (5) are monitored, **characterized in that**, when a predefined situation is detected, the outputting of the parking space is prohibited for a predefined distance, the parking process is aborted or a warning is output to the driver, wherein the predefined situation in which the outputting of the parking space is prohibited for the predefined distance is sensing of overtaking or oncoming vehicles, detection of a pedestrian crossing, detection of a multi-lane road, detection of an object in the blind spot of the vehicle or detection of an intersection region,
wherein the predefined situation in which the parking process is aborted or a warning is output to the driver comprises sensing of a limitation of a transverse parking space by means of pillars.

2. Method according to Claim 1, **characterized in that** an object is sensed as a pillar (21) if a reduction in the distance from an object and subsequent increase in the distance from the object are measured.

3. Method according to Claim 1, **characterized in that** radar sensors or optical sensors are used to sense oncoming or overtaking vehicles.

4. Method according to Claim 1, **characterized in that** data of a navigation system is used to sense multi-lane roads.

5. Method according to Claim 1, **characterized in that** a main beam assistant is used to sense oncoming vehicles or vehicles travelling ahead.

6. Method according to Claim 1, **characterized in that** a blind spot assistant is used to sense overtaking vehicles.

7. Device for assisting a driver of a motor vehicle (5) during a driving manoeuvre, comprising means (25) for sensing the surroundings laterally next to the motor vehicle (5), means for determining a trajectory (23) along which the vehicle can park in a sensed parking space (3, 11), and means with which, when a predefined situation is detected, the outputting of the parking space can be prohibited for a predefined distance, the parking process can be aborted or a warning can be output to the driver, wherein the outputting of the parking space is prohibited for a predefined distance if the predefined situation is sensing of overtaking or oncoming vehicles, detection of a pedestrian crossing, detection of a multi-lane road, detection of an object in the blind spot of the vehicle or detection of an intersection region, and the parking process is aborted or a warning is output to the driver if the predefined situation comprises sensing of a limitation of a transverse parking space by means of pillars.

8. Device according to Claim 7, **characterized in that** the means for determining the trajectory (23) and the means with which, when a predefined situation is detected, the outputting of the parking space can be prohibited for a predefined distance, the parking process can be aborted or a warning can be output to the driver, comprise a control unit with a memory medium and microprocessor.

9. Device according to Claim 7 or 8, **characterized in that** the means (25) for sensing the surroundings laterally next to the motor vehicle (5) comprise ultrasonic sensors, infrared sensors, radar sensors, LIDAR sensors and optical sensors.

## Revendications

1. Procédé d'assistance d'un conducteur d'un véhicule automobile (5), dans lequel pendant la conduite, l'environnement est détecté latéralement en côté par rapport au véhicule automobile (5), pour détecter une place de stationnement (3, 11) et en cas de détection d'une place de stationnement (3, 11), une trajectoire (23) est définie le long de laquelle le véhicule automobile (5) peut être stationné dans la place de stationnement (3, 11), sachant que pendant le stationnement, l'environnement du véhicule automobile (5) est surveillé, **caractérisé en ce qu'**en cas d'identification d'une situation prédéfinie, le signalement des places de stationnement est empêché pour un tronçon de chemin prédéfini, le processus de stationnement étant interrompu ou un avertissement étant envoyé au conducteur, la situation prédéfinie dans laquelle le signalement des places de stationnement est empêché pour le tronçon de chemin prédéfini étant une détection de véhicules en cours de dépassement ou venant en face, une identification d'un passage piétons, une identification d'une rue à plusieurs voies, une identification d'un objet dans l'angle mort du véhicule automobile ou une identification d'une zone d'intersection, la situation prédéfinie dans laquelle une interruption du processus de stationnement ou l'envoi d'un avertissement au conducteur se produit comprenant une détection d'une délimitation d'une place de stationnement transversale par des poteaux.

2. Procédé selon la revendication 1, **caractérisé en ce qu'**un objet prenant la forme de poteaux (21) est détecté lorsqu'une réduction de l'éloignement par rapport à un objet et une augmentation conjointe de l'éloignement par rapport audit objet est mesurée.

3. Procédé selon la revendication 1, **caractérisé en ce que** la détection de véhicules en cours de dépassement ou venant en face est réalisée au moyen de capteurs radar ou de capteurs optiques.

4. Procédé selon la revendication 1, **caractérisé en ce que** la détection de données de rues à plusieurs voies est réalisée au moyen d'un système de navigation.

5. Procédé selon la revendication 1, **caractérisé en ce que** la détection de véhicules en cours de dépassement ou venant en face est réalisée au moyen d'un assistant de détection de feux.

6. Procédé selon la revendication 1, **caractérisé en ce que** la détection de véhicules en cours de dépassement est réalisée au moyen d'un assistant d'angle mort.

7. Dispositif d'assistance d'un conducteur d'un véhicule automobile (5) lors d'une manoeuvre de conduite, comprenant des moyens (25) de détection de l'environnement latéralement en côté par rapport au véhicule automobile (5), des moyens de détermination d'une trajectoire (23) le long de laquelle le véhicule peut être stationné dans une place de stationnement (3, 11) détectée ainsi que des moyens permettant, en cas d'identification d'une situation prédéfinie dans laquelle le signalement des places de stationnement est supprimé pour un tronçon de chemin prédéfini, d'interrompre le processus de stationnement ou d'envoyer un avertissement au conducteur, le signalement des places de stationnement étant supprimé pour un tronçon de chemin prédéfini lorsque la situation prédéfinie est une détection de véhicules en cours de dépassement ou venant en face, une identification d'un passage piétons, une identification d'une rue à plusieurs voies, une identification d'un objet dans l'angle mort du véhicule automobile ou une identification d'une zone d'intersection et le processus de stationnement ou l'envoi d'un avertissement au conducteur se produisant lorsque la situation prédéfinie comprend une détection d'une délimitation d'une place de stationnement transversale par des poteaux.

8. Dispositif selon la revendication 7, **caractérisé en ce que** les moyens de détermination de la trajectoire (23) et les moyens à l'aide desquels en cas d'identification d'une situation prédéfinie, le signalement des places de stationnement pour un tronçon de chemin prédéfini peut être supprimé, le processus de stationnement interrompu ou un avertissement envoyé au conducteur, comprend un appareil de commande équipé d'un support de mémoire et d'un microprocesseur.

9. Dispositif selon la revendication 7 ou 8, **caractérisé en ce que** les moyens (25) de détection de l'environnement prévus latéralement en côté par rapport au véhicule automobile (5) comprennent des capteurs à ultrasons, des capteurs à infrarouge, des capteurs radar, des capteurs LIDAR et des capteurs optiques.
